# EUROPÄISCHE PATENTSCHRIFT

(11) **EP 3 004 702 B1**
(45) Veröffentlichungstag und Bekanntmachung des Hinweises auf die Patenterteilung: **31.07.2019**
(21) Anmeldenummer: 14721214.6
(22) Anmeldetag: 02.05.2014
(51) Int. Cl.: F16K 27/00

(54) **KOMBINATION AUS EINEM GEHÄUSE UND EINEM VENTIL**
COMBINATION OF A HOUSING AND A VALVE
COMBINATION D'UN BOÎTIER ET D'UNE SOUPAPE

(30) Priorität: 08.06.2013 DE 102013009650
(43) Veröffentlichungstag der Anmeldung: 13.04.2016
(73) Patentinhaber: Hydac Fluidtechnik GmbH, 66280 Sulzbach/Saar (DE)
(72) Erfinder: PIPPEL, Olaf, 60610 Chicago, IL (DE); SCHULZ, Frank, 66440 Blieskastel-Bierbach (DE); BILL, Markus, 66265 Heusweiler (DE)
(74) Vertreter: Bartels und Partner, Patentanwälte
(86) Internationale Anmeldenummer: PCT/EP2014/001173
(87) Internationale Veröffentlichungsnummer: WO 2014/194974

(56) Entgegenhaltungen:
- EP-A1- 1 083 372
- EP-A1- 1 331 425
- EP-A2- 1 114 954
- DE-U1-202006 013 531
- GB-A- 2 079 864
- GB-A- 2 271 165
- US-A- 4 284 097
- US-A- 4 714 236

## Beschreibung

Die Erfindung betrifft eine Kombination aus einem Gehäuse und einem Ventil, insbesondere für den Einsatz bei Hydraulikkreisläufen.

Derartige Ventile, die in der Fachsprache als Cartridge-Ventile bezeichnet werden und als hydraulische Komponenten bei hydraulischen Systemen vorgesehen sind, sind Stand der Technik. Beispielsweise zeigen die Dokumente EP 1 882 122 B1 und DE 10 2011 010 474 A1 Ventile dieser Gattung in Form von Proportional-Druckregelventilen. Als Befestigungseinrichtung ist ein Zentralgewinde mit am Ventilkörper befindlichem Außengewinde und einem Innengewinde an einer Einbauöffnung des Gehäuses vorgesehen, wobei für die Sicherstellung einer ausreichenden Befestigung ein entsprechendes Anziehdrehmoment erforderlich ist. Dieses ist hauptsächlich abhängig von der im Betrieb zu erwartenden Beanspruchung, den verwendeten Werkstoffen von Ventilkörpern und Einschraubgehäuse sowie der Befestigungsgeometrie. Auch bei Einhaltung eines jeweils vorgeschriebenen Drehmoments sind für die Gewährleistung einer hohen Sicherheit zusätzliche, aufwendige Methoden zur Schraubensicherung erforderlich, wie Kleben und/oder Verwendung gezahnter Sicherungsscheiben und dergleichen.

Eine weitere bekannte Art der Befestigung patronenartiger Ventilkörper sieht die Verwendung von Befestigungsflanschen vor, die mit dem Gehäuse verschraubbar sind und von der dem Ventilkörper zugeordneten Magnetbetätigungseinrichtung seitlich vorstehen. Ein Nachteil dieser bekannten Lösung besteht darin, dass der seitlich auskragende Flansch zu einer wesentlichen Vergrößerung des erforderlichen Einbauraums führt, was insbesondere störend ist, wenn betreffende Ventile in einem Gehäuse einzusetzen sind, das aus einem sog. Steuerblock gebildet ist, in dem viele Ventile nebeneinander anzuordnen sind.

Die EP 1 083 372 A1 beschreibt ein Ventil, insbesondere für den Einsatz bei Hydraulikkreisläufen, mit einem Ventilkörper in Patronenbauweise, der in ein Fluidanschlüsse aufweisendes Gehäuse einbaubar und darin mittels einer Befestigungseinrichtung festlegbar ist, wobei die Befestigungseinrichtung mindestens ein als eigenständiges Bauteil zwischen Ventilkörper und Gehäuse befindliches Sperrelement aufweist, das Sperrflächen aufweist, die relativ zur Längsachse des Ventilkörpers zwischen einer das Einsetzen des Ventilkörpers in das Gehäuse ermöglichenden Montageposition und einer Sperrposition bewegbar sind, in der sie durch Anlage an Halteflächen von Gehäuse und Ventilkörper diesen in vorzugsweise spielfreier Einbauposition sichern, wobei das jeweilige Sperrelement durch einen Ringkörper gebildet ist, der für einen Einbauvorgang durch elastische Verformung in die Montageposition erweiterbar ist und bei Erreichen der Einbauposition durch Rückverformung die Sperrposition einnimmt, in der er mit seinen Sperrflächen zur Anlage mit den Halteflächen kommt, wobei ein Ringkörper in Form eines metallischen Sprengringes mit rundem Querschnitt vorgesehen ist und wobei der Ringkörper in einem im Gehäuse befindlichen Einbauraum aufgenommen ist, der, bezogen auf die vom Ventilkörper definierte Längsachse eine eine Erweiterung des Sprengringes ermöglichende radiale Tiefe aufweist und auf der der Einbauöffnung des Gehäuses zugewandten Seite durch eine erste Schrägfläche axial begrenzt ist, die die Haltefläche des Gehäuses bildet, die den Sprengring gegen eine in Richtung auf die Einbauöffnung verlaufende Bewegung sichert.

Weitere Ventile gehen aus der EP 1 331 425 A1, der US 4 284 097, der US 4 714 236, der DE 20 2006 013 531 U1, der GB 2 271 165 A, der EP 1 114 954 A2 und der GB 2 079 864 A hervor.

Ausgehend von diesem Stand der Technik stellt sich die Erfindung die Aufgabe, eine Kombination aus einem Gehäuse und einem Ventil mit einem Ventilkörper in Patronenbauweise zur Verfügung zu stellen, dessen Bauweise, unter Beibehaltung der im Stand der Technik erreichten Vorteile, eine besonders einfache und schnelle Montage sowie eine Einsparung an erforderlichem Bauraum ermöglicht.

Diese Aufgabe ist erfindungsgemäß durch eine Kombination aus einem Gehäuse und einem Ventil gelöst, das die Merkmale des Patentanspruchs 1 in seiner Gesamtheit aufweist.

Nach Anspruch 1 besteht eine wesentliche Besonderheit der Erfindung darin, dass eine weitere Schrägfläche, die am Ventilkörper einem Bereich des größten Außendurchmessers in Einbaurichtung vorangeht, eine Einführschräge bildet, die den Sprengring beim Einbauvorgang in den Einbauraum erweitert. Ohne dass Montagewerkzeuge erforderlich wären, erfolgt daher die Verformung des Sprengringes selbsttätig im Zuge der Einsetzbewegung des Ventilkörpers. Insbesondere beginnt die Einführschräge mit einem kleineren Durchmesser als der Innendurchmesser des Sperrelementes damit ein Aufweiten bei der Montage vereinfacht ermöglicht ist.

Es ist ferner vorgesehen, dass die Befestigungseinrichtung mindestens ein als eigenständiges Bauteil zwischen Ventilkörper und Gehäuse befindliches Sperrelement aufweist, das Sperrflächen aufweist, die relativ zur Längsachse des Ventilkörpers zwischen einer das Einsetzen des Ventilkörpers in das Gehäuse ermöglichenden Montageposition und einer Sperrposition bewegbar sind, in der sie durch Anlage an Halteflächen von Gehäuse und Ventilkörper diesen in Einbauposition sichern. Die Erfindung sieht somit anstelle der Befestigung mittels Schraubverbindungen, wie Zentralgewinde oder Flanschverschraubungen, eine Steckverbindung vor, so dass bei der Montage Schraubvorgänge in Wegfall kommen, keine Notwendigkeit besteht, spezielle Drehmomente einzuhalten und daher eine einfache und schnelle Ventilmontage ermöglicht ist. Zusätzliche Maßnahmen für Schraubensicherungen kommen ebenfalls in Wegfall. Zudem ergibt sich eine Einsparung an erforderlichem Einbauraum, weil keine auskragenden Bauteile, wie ein Außensechskant für einen Maulschlüssel oder ein Befestigungsflansch, erforderlich sind. Das erfindungsgemäße Ventil eignet sich also insbesondere für den Einsatz bei Steuerblöcken mit einer Mehrzahl nebeneinander angeordneter Ventile. Der Vorteil der Platzersparnis kommt insbesondere im Bereich der Mobilhydraulik, beispielsweise in Bau- und Kommunalmaschinen, zum Tragen, wo kleiner dimensionierte Steuerblöcke auch zu einer Gewichtsreduzierung führen.

Das jeweilige Sperrelement ist durch einen den Ventilkörper auf zumindest einem Großteil eines Umfangsbereichs umgebenden Ringkörper gebildet, der für einen Einbauvorgang durch elastische Verformung in die Montageposition erweiterbar ist und bei Erreichen der Einbauposition durch Rückverformung die Sperrposition einnimmt, in der er mit Sperrflächen zur Anlage mit den Halteflächen kommt. Dadurch ist eine Steckverbindung in der Art einer Rastverbindung realisiert, die bei einem durch Einstecken erfolgenden Montagevorgang durch Zurückschnappen des verformten Ringelementes selbsttätig wirksam ist.

Es ist ein Ringkörper in Form eines metallischen Sprengringes mit rundem Querschnitt vorgesehen.

Es ist weiter vorgesehen, dass der Ringkörper in einem im Gehäuse befindlichen Einbauraum aufgenommen ist, der, bezogen auf die vom Ventilkörper definierte Längsachse, eine eine Erweiterung des Sprengringes ermöglichende radiale Tiefe aufweist und auf der der Einbauöffnung des Gehäuse zugewandten Seite durch eine Schrägfläche axial begrenzt ist, die die Haltefläche des Gehäuses bildet, die den Sprengring gegen eine in Richtung auf die Einbauöffnung verlaufende Bewegung sichert. Dabei kann die radiale Tiefe des Einbauraums größer als der Schnurdurchmesser des Sprengringes sein, so dass dieser so weit aufgeweitet werden kann, dass er das Einsetzen des Ventilkörpers zulässt.

Bei besonders vorteilhaften Ausführungsbeispielen ist in Einbaurichtung dem Abschnitt des größten Außendurchmessers nachfolgend eine weitere Schrägfläche als mit dem Sprengring zusammenwirkende Haltefläche des Ventilkörpers vorgesehen.

Hinsichtlich der Formgebung der Halteflächen ist mit besonderem Vorteil die Anordnung so getroffen, dass die die Haltefläche des Gehäuses bildende erste Schrägfläche und die die Haltefläche des Ventilkörpers bildende weitere Schrägfläche in Richtung auf die Längsachse derart zueinander konvergierend verlaufen, dass der Abstand zwischen ihnen sich innerhalb ihres Verlaufs auf einen Wert verringert, der kleiner als der Schnurdurchmesser des Sprengringes ist. Durch die Wahl des Winkels der Konvergenz von gehäuseseitiger Schrägfläche und ventilkörperseitiger Schrägfläche lässt sich erreichen, dass der Sprengring sich im Zuge der Rückverformung, also unter seiner elastischen Spannkraft, an beide Halteflächen anklemmt.

Dadurch ergibt sich der besondere Vorteil, dass das Ventil während des Betriebs ohne Spiel in axialer Richtung fixiert ist, weil der Sprengring zwischen den Halteflächen geklemmt ist, selbst wenn Nennmaße der Bauteile durch herstellungsbedingte Toleranzen schwanken, weil abweichende Maße und Abstände durch die elastische Klemmung des Sprengringes zwischen den Halteflächen ausgeglichen werden.

Bei besonders vorteilhaften Ausführungsbeispielen weist der Sprengring ein aus der Ringebene abgewinkeltes Endteil auf, und im Ventilkörper sind eine axial verlaufende Nut und im Gehäuse eine vom Einbauraum sich axial erstreckende Bohrung vorgesehen, wobei Nut und Bohrung einen Eingriffsraum für das Endteil des Sprengrings bilden. Über den mit dem Gehäuse undrehbar verbundenen Sprengring ist der in Einbauposition mittels des Sprengrings geklemmte Ventilkörper gegen Verdrehen gesichert. Eine Verdrehsicherung ist beim Einsatz von Magnetventilen besonders wichtig, um zu verhindern, dass es im Betrieb, beispielsweise durch Vibrationen od. dgl., zu Drehbewegungen und damit zu einer Verdrillung des Anschlusskabels und damit zu Schäden an diesem und dem zugehörigen Stecker kommt.

Nachstehend ist die Erfindung anhand eines in der Zeichnung dargestellten Ausführungsbeispiels im Einzelnen erläutert. Es zeigen:
- Fig. 1 und 2: jeweils ein Cartridge-Ventil gemäß dem Stand der Technik, wobei zwei unterschiedliche Bauweisen der Befestigungseinrichtung dargestellt sind und das jeweilige Gehäuse aufgeschnitten ist;
- Fig. 3: eine skizzenhafte Darstellung zur Erläuterung der Funktionsweise der Befestigungseinrichtung für ein Ausführungsbeispiel des erfindungsgemäßen Ventils;
- Fig. 4: einen vergrößert und abgebrochen gezeichneten Längsschnitt lediglich der einen Seite der Befestigungseinrichtung gemäß einem Ausführungsbeispiel des erfindungsgemäßen Ventils;
- Fig. 5: eine perspektivische Schrägansicht eines Sprengringes als Bestandteil der Befestigungseinrichtung des Ausführungsbeispiels;
- Fig. 6: eine den Fig. 1 und 2 ähnliche Darstellung des Ausführungsbeispiels des erfindungsgemäßen Ventils; und
- Fig. 7 und 8: Querschnitte des Ausführungsbeispiels, in denen zwei verschiedene Ausführungsformen einer Verdrehsicherung gezeigt sind.

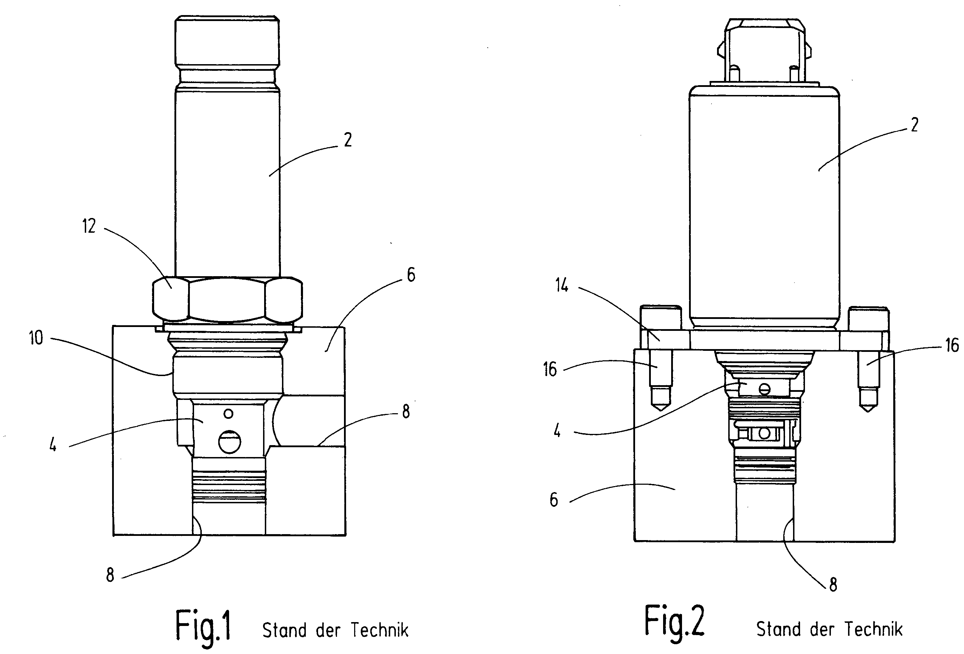

Die Cartridge-Ventile des Standes der Technik, die in Fig. 1 und 2 gezeigt sind, können als Proportional-Druckregelventile ausgebildet sein und sind mit einer Betätigungsmagneteinrichtung 2 versehen. Diese dient in der dem Stand der Technik entsprechenden Weise zur Ansteuerung eines in einem Ventilkörper 4 bewegbaren, nicht sichtbaren Regelkolbens oder -schiebers. Der Ventilkörper 4 ist mittels einer Befestigungseinrichtung in ein Gehäuse 6 eingebaut, das Fluidanschlüsse 8 aufweist. Bei der in Fig. 1 gezeigten Bauform ist die Befestigungseinrichtung durch ein Zentralgewinde 10 gebildet. Für das Herstellen der Verschraubung mit dem Zentralgewinde 10 weist der Ventilkörper 4 einen Außensechskant 12 auf, um mittels eines Maulschlüssels das für die Schraubverbindung erforderliche Anziehdrehmoment zu erzeugen. Bei dem in Fig. 2 gezeigten Beispiel des Standes der Technik ist die Befestigungseinrichtung durch eine Flanschverschraubung gebildet. Hierfür ist ein mit dem nicht sichtbaren Polkern der Betätigungsmagneteinrichtung 2 verbundener Befestigungsflansch 14 vorgesehen, der von der Betätigungsmagneteinrichtung 2 seitlich vorsteht und an den auskragenden Bereichen mittels Befestigungsschrauben 16 mit dem Gehäuse 6 verschraubt ist.

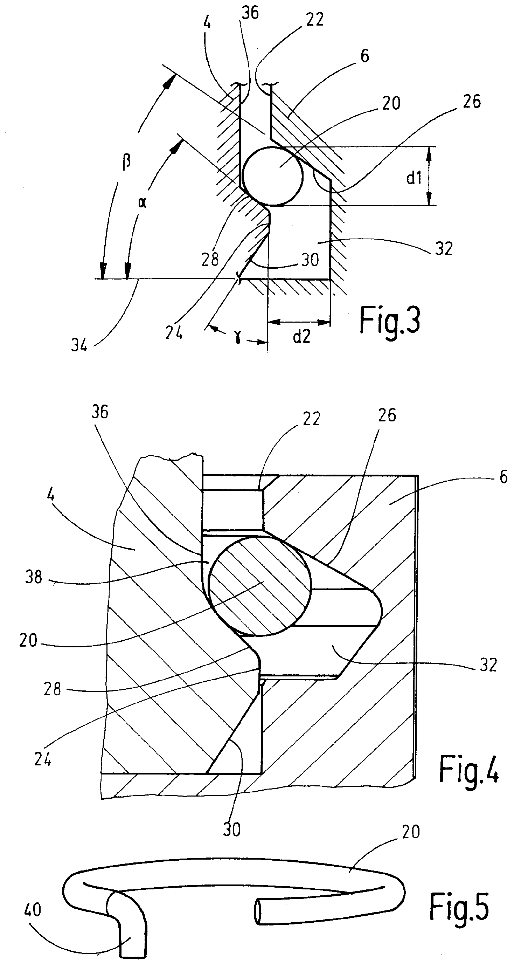

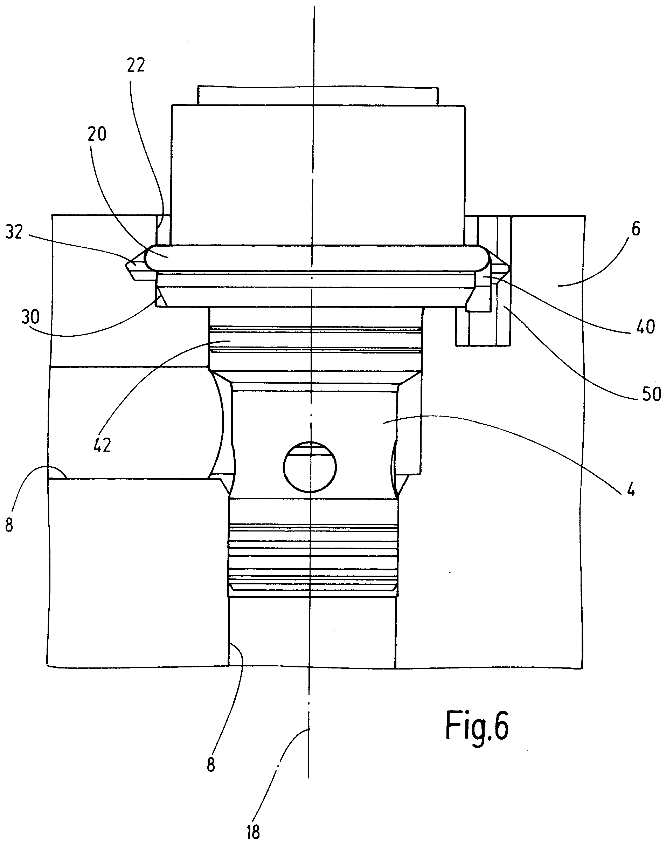

Während das erfindungsgemäße Ventil hinsichtlich der Betätigungsmagneteinrichtung 2 und der funktionalen Gestaltung des Ventilkörpers 4 und des Gehäuses 6 dem Stand der Technik entsprechen kann, besteht der grundsätzliche Unterschied gegenüber dem Stand der Technik, dass die Befestigungseinrichtung ohne Schraubverbindungen, sei es ein Zentralgewinde oder eine Flanschverschraubung, in Form einer Steckverbindung realisiert ist. Bei dem gezeigten Ausführungsbeispiel ist diese Verbindung in der Art einer Verrastung mittels eines Sperrelements in Form eines Sprengringes 20 gebildet, s. Fig. 5, in der der Sprengring 20 gesondert dargestellt ist, sowie Fig. 6, die das Ventil in der durch den Sprengring 20 gesicherten Einbauposition zeigt.

Beim vorliegenden Beispiel ist der Sprengring 20 ein Stahlring mit rundem Querschnitt.

Die Fig. 3 zeigt das Funktionsprinzip der gebildeten Verrastung, die sich aus der Geometrie der dem Sprengring 20 benachbarten Bereiche des Gehäuses 6 und des Ventilkörpers 4 ergibt. In Fig. 3 und 4 sind die Einbauöffnung des Gehäuses 6 mit 22 und der Bereich des größten Durchmessers des Ventilkörpers 4 mit 24 bezeichnet. Im Bereich 24 ist der Außendurchmesser des Ventilkörpers 4 lediglich geringfügig geringer als der Innendurchmesser der Einbauöffnung 22, um das Einsetzen des Ventilkörpers 4 beim Montagevorgang zu ermöglichen. In den Fig. 3, 4 und 6, die jeweils die Einbauposition zeigen, befindet sich der Sprengring 20 in einem Zustand, bei dem er gegenüber seinem unbelasteten Nenndurchmesser teilweise aufgeweitet, also radial gespannt ist und mit durch seine Oberfläche gebildeten Sperrflächen für die axiale Sicherung des Ventilkörpers 4 an Halteflächen liegt, nämlich an einer ersten Schrägfläche 26 des Gehäuse 6 und einer weiteren Schrägfläche 28 des Ventilkörpers 4. Für das Einsetzen des Ventilkörpers 4 ist der Sprengring 20 aus der gezeigten Position weiter aufzuweiten. Hierfür ist am Ventilkörper 4, dem Bereich des größten Durchmessers 24 in Einbaurichtung vorangehend, eine weitere Schrägfläche 30 vorgesehen, die eine Einführschräge bildet, die den Sprengring 20 beim Einsetzvorgang erweitert. Für eine sichere Erweiterungsfunktion bildet die dritte Schrägfläche 30 mit der Richtung der Einbaubewegung einen in Fig. 3 mit γ bezeichneten Winkel, der weniger als 45°, vorzugsweise etwa 30° beträgt. Um Raum für das Aufweiten zur Verfügung zu stellen, ist der Sprengring 20 im Gehäuse 6 in einer Ringnut 32 aufgenommen, deren radiale Tiefe d2 größer ist als der Schnurdurchmesser d1 des Sprengrings 20. Die erste, am Gehäuse 6 vorgesehene Schrägfläche 26, die vom radial äußeren Ende der Nut 32 zur Einbauöffnung 22 hin verläuft, bildet mit der zur Längsachse senkrechten Radialebene 34 (Fig. 3) einen Winkel β. Die weitere Schrägfläche 28, die am Ventilkörper 4 vom Bereich des größten Durchmessers 24 zu einem im Außendurchmesser verringerten Umfangsreich 36 verläuft, der mit der Einbauöffnung 22 einen Spalt bildet, verläuft zur Radialebene 34 unter einem Winkel α. Wie am deutlichsten aus Fig. 3 zu ersehen ist, ist der Winkel α größer als der Winkel β, so dass die Schrägflächen 26 und 28 radial nach innen zueinander konvergieren, d.h., dass sich der Zwischenraum zwischen den Schrägflächen 26 und 28 radial einwärts verringert. Beim vorliegenden Ausführungsbeispiel ist der Winkel β um 6° geringer als der Winkel α. Beim vorliegenden Beispiel sind für den Winkel α 41 ° und für den Winkel β 35° vorgesehen.

Beim vorliegenden Beispiel ist die Geometrie derart gestaltet, dass sich bei dem Konvergenzwinkel von 6° der Abstand zwischen den Schrägflächen 26 und 28 an einer Stelle auf einen Wert verengt, der kleiner als der Schnurdurchmesser d1 ist, bevor der Sprengring 20 mit dem Umfangsbereich 36 des Ventilkörpers 4 in Anlage kommt. Dies bedeutet, dass bei der Einbauposition zwischen dem unter Radialspannung stehenden Sprengring 20 und dem Umfangsbereich 36 des Ventilkörpers 4 ein Spalt 38 (Fig. 4) verbleibt. Dadurch, dass so die Klemmung des Sprengrings 20 zwischen den Schrägflächen 26, 28 erfolgt, bevor der Sprengring 20 eine radiale Endlage am Umfangsbereich 36 erreicht, werden toleranzbedingte Maßabweichungen ausgeglichen, so dass die gebildete Steckverbindung in jedem Fall axial spielfrei ist. Wie Fig. 6 zeigt, ist der Ventilkörper 4 in der Einbauposition durch eine Dichteinrichtung in Form eines O-Ringes 42 gegenüber dem Gehäuse 6 abgedichtet.

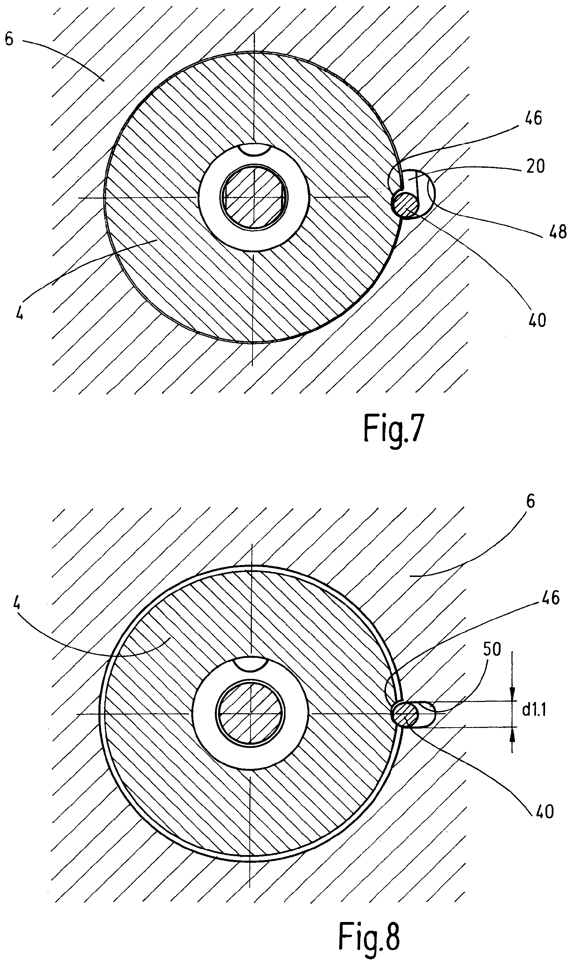

Wie Fig. 5 zeigt, weist der Sprengring 20 ein aus der Ringebene rechtwinklig abgebogenes Endteil 40 auf. Wie die Fig. 7 und 8 zeigen, kann das Endteil 40 in Zusammenwirkung mit einer am Ventilkörper 4 in Längsrichtung verlaufenden Nut 46 und einem im Gehäuse 6 ausgebildeten Eingriffsraum eine Verdrehsicherung für den Ventilkörper 4 bilden. Bei dem in Fig. 7 gezeigten Beispiel ist der Eingriffsraum durch eine im Gehäuse 6 ausgebildete Bohrung 48 gebildet. Beim Montagevorgang wird darauf geachtet, dass die Nut 46 im Ventilkörper 4 und die Gehäusebohrung 48 in einer Flucht stehen, so dass das abgewinkelte Endteil 40 des Sprengrings 20 in die Nut 46 eingreift und den Ventilkörper 4 gegen Drehung sichert. Bei dem Beispiel von Fig. 7 ist aufgrund des Durchmessers der Bohrung 48 ein kleiner Drehwinkel bis etwa 10° möglich. Demgegenüber zeigt das Beispiel von Fig. 8 anstelle der Gehäusebohrung 48 eine im Gehäuse 6 in Längsrichtung verlaufende Nut 50, deren Breite d1.1 geringfügig größer ist als der Schnurdurchmesser d1 des Sprengringes 20. Die dem Schnurdurchmesser d1 angepasste Nut 50 verhindert auch kleine Drehbewegungen, jedoch ist das Einbringen der Nut 50 fertigungstechnisch verglichen mit dem Einbringen einer Bohrung 48 etwas aufwendiger.

Die aufgezeigte Ausführung des Sperrelements in Form eines Sprengringes 20 aus Edelstahl entspricht einer bevorzugten Ausführungsform. Jedoch kann auch ein Sprengring aus einem anderen metallischen Werkstoff mit ausreichendem Elastizitätsmodul zum Einsatz kommen. Ebenfalls kann ein Ring aus Kunststoff vorgesehen sein, wenn das Ventil Spiel in axialer Richtung haben darf und die Betriebskräfte zulässige Werte nicht überschreiten, wobei faserverstärkte Kunststoffe mit hoher Steifigkeit für die Anwendung zu bevorzugen sind. Auch kann ein Draht aus Stahl, der in die Nut eingefädelt wird und keine vorgefertigte Form besitzt, zum Einsatz kommen. Ferner können auch Drahtseile als Sperrelement zum Einsatz kommen. Die beiden letztgenannten Varianten setzen eine entsprechend dimensionierte Einführung in die Nut voraus, also eine radiale Zugänglichkeit zur Nut, beispielsweise in Form einer Schrägbohrung.

## Patentansprüche

1. Kombination aus einem Gehäuse (6) und einem Ventil, insbesondere für den Einsatz bei Hydraulikkreisläufen, mit einem Ventilkörper (4) in Patronenbauweise, der in das Fluidanschlüsse (8) aufweisende Gehäuse (6) einbaubar und darin mittels einer Befestigungseinrichtung (20, 26, 28) festlegbar ist, wobei die Befestigungseinrichtung mindestens ein als eigenständiges Bauteil zwischen Ventilkörper (4) und Gehäuse (6) befindliches Sperrelement (20) aufweist, das Sperrflächen aufweist, die relativ zur Längsachse (18) des Ventilkörpers (4) zwischen einer das Einsetzen des Ventilkörpers (4) in das Gehäuse (6) ermöglichenden Montageposition und einer Sperrposition bewegbar sind, in der sie durch Anlage an Halteflächen (26, 28) von Gehäuse (6) und Ventilkörper (4) diesen in vorzugsweise spielfreier Einbauposition sichern, wobei das jeweilige Sperrelement durch einen Ringkörper (20) gebildet ist, der für den Einbauvorgang durch elastische Verformung in die Montageposition erweiterbar ist und bei Erreichen der Einbauposition durch Rückverformung die Sperrposition einnimmt, in der er mit seinen Sperrflächen zur Anlage mit den Halteflächen (26, 28) kommt, wobei als Ringkörper ein metallischer Sprengring (20) mit rundem Querschnitt vorgesehen ist, wobei der Ringkörper in einem im Gehäuse (6) befindlichen Einbauraum (32) aufgenommen ist, der, bezogen auf die vom Ventilkörper (4) definierte Längsachse (18) eine eine Erweiterung des Sprengringes (20) ermöglichende radiale Tiefe (d2) aufweist und auf der einer Einbauöffnung (22) des Gehäuses (6) zugewandten Seite durch eine erste Schrägfläche (26) axial begrenzt ist, die die Haltefläche des Gehäuses (6) bildet, die den Sprengring (20) gegen eine in Richtung auf die Einbauöffnung (22) verlaufende Bewegung sichert, und wobei eine weitere Schrägfläche (30), die am Ventilkörper (4) einem Bereich (24) des größten Außendurchmessers in Einbaurichtung vorangeht, eine Einführschräge bildet, die den Sprengring (20) beim Einbauvorgang in den Einbauraum (32) erweitert.

2. Kombination nach Anspruch 1, **dadurch gekennzeichnet, dass** die radiale Tiefe (d2) des Einbauraums (32) größer als der Schnurdurchmesser (d1) des Sprengringes (20) ist.

3. Kombination nach Anspruch 1 oder 2, **dadurch gekennzeichnet, dass** in Einbaurichtung dem Bereich (24) des größten Außendurchmessers nachfolgend eine weitere Schrägfläche (28) als mit dem Sprengring (20) zusammenwirkende Haltefläche des Ventilkörpers (4) vorgesehen ist.

4. Kombination nach einem der vorstehenden Ansprüche, **dadurch gekennzeichnet, dass** die die Haltefläche des Gehäuses (6) bildende erste Schrägfläche (26) und die die Haltefläche des Ventilkörpers (4) bildende weitere Schrägfläche (28) in Richtung auf die Längsachse (18) derart zueinander konvergierend verlaufen, dass der Abstand zwischen ihnen sich innerhalb ihres Verlaufs auf einen Wert verringert, der kleiner als der Schnurdurchmesser (d1) des Sprengringes (20) ist.

5. Kombination nach einem der vorstehenden Ansprüche, **dadurch gekennzeichnet, dass** der Sprengring (20) ein aus der Ringebene abgewinkeltes Endteil (40) aufweist, das im Ventilkörper (4) eine axial verlaufende Nut (46) und im Gehäuse (6) eine vom Einbauraum (32) sich axial erstreckende Ausnehmung in Form einer Bohrung (48) oder einer Nut (50) vorgesehen sind, die einen Eingriffsraum für das Endteil (40) des Sprengringes (20) bilden.

## Claims

1. A combination of a housing (6) and a valve, in particular for use in hydraulic circuits, with a valve body (4) designed as a cartridge, which can be integrated into the housing (6) having fluid connections (8) and fixed therein by means of a securing device (20, 26, 28), wherein the securing device has at least one blocking element (20) in the form of a separate component located between valve body (4) and housing (6), which blocking element has blocking surfaces which can be moved relative to the longitudinal axis (18) of the valve body (4) between an assembly position making possible the insertion of the valve body (4) into the housing (6) and a blocking position in which the blocking surfaces secure the valve body in an installation position preferably free of play by bearing against retaining surfaces (26, 28) of housing (6) and valve body (4), wherein the respective blocking element is formed by an annular body (20), which can be expanded, for the installation operation, into the assembly position by elastic deformation and which, upon reaching the installation position, assumes the blocking position by recovery of shape, in which position it comes to bear, with the blocking surfaces, against the retaining surfaces (26, 28), wherein a metal snap ring (20) with a round cross-section is provided as annular body, wherein the annular body is accommodated in an installation space (32) located in the housing (6), which installation space, relative to the longitudinal axis (18) defined by the valve body (4), has a radial depth (d2) making possible an expansion of the snap ring (20) and which is axially delimited on the side facing the one installation opening (22) of the housing (6) by a first angular surface (26) which forms the retaining surface of the housing (6), which secures the snap ring (20) against movement in the direction of the installation opening (22), and wherein a further angular surface (30), which is situated on the valve body (4) in front of a section (24) with the largest external diameter in the installation direction, forms an insertion chamfer which expands the snap ring (20) into the installation space (32) during the insertion operation.

2. The combination according to claim 1, **characterised in that** the radial depth (d2) of the installation space (32) is greater than the cross-section diameter (d1) of the snap ring (20).

3. The combination according to claim 1 or 2, **characterised in that**, in the installation direction, following the section (24) with the largest external diameter, a further angular surface (28) is provided as retaining surface of the valve body (4) interacting with the snap ring (20).

4. The combination according to one of the preceding claims, **characterised in that** the first angular surface (26) forming the retaining surface of the housing (6) and the further angular surface (28) forming the retaining surface of the valve body (4) converge in the direction of the longitudinal axis (18) such that the distance between them as they extend is reduced to a value which is smaller than the cross-section diameter (d1) of the snap ring (20).

5. The combination according to one of the preceding claims, **characterised in that** the snap ring (20) has an end part (40) angled away from the ring plane, that an axially extending groove (46) is provided in the valve body (4) and a recess in the form of a bore (48) or a groove (50), extending axially from the installation space (32), is provided in the housing (6), and these form an engagement space for the end part (40) of the snap ring (20).

## Revendications

1. Combinaison d'un boîtier (6) et d'une soupape, à utiliser notamment dans des circuits hydrauliques, comprenant un corps (4) de soupape en mode de construction en cartouche, qui peut être monté dans le boîtier (6) ayant des raccords (8) pour du fluide et qui peut y être fixé au moyen d'un dispositif (20, 26, 28) de fixation, le dispositif de fixation ayant au moins un élément (20) de blocage se trouvant comme pièce indépendante entre le corps (4) de la soupape et le boîtier (6) et ayant des surfaces de blocage, qui, par rapport à l'axe (18) longitudinal du corps (4) de la soupape, sont mobiles entre une position de montage, permettant l'insertion du corps (4) de la soupape dans le boîtier (6), et une position de blocage dans laquelle, par application à des surfaces (26, 28) de maintien du boîtier (6) et du corps (4) de la soupape, elles mettent celle-ci dans une position de montage de préférence sans jeu, l'élément de blocage respectif étant formé d'un corps (20) annulaire, qui, pour l'opération de montage, peut, par déformation élastique, être élargi dans la position de montage et qui, lorsque la position de montage est atteinte, prend, par déformation en retour, la position de blocage, dans laquelle il vient, par ses surfaces de blocage, en contact avec les surfaces (26, 28) de maintien, dans lequel il est prévu, comme corps annulaire, un jonc (20) métallique de section transversale circulaire,
dans lequel le corps annulaire est reçu dans un espace (32) de montage se trouvant dans le boîtier (6), qui, rapporté à l'axe (18) longitudinal défini par le corps (4) de la soupape, a une profondeur (d2) radiale permettant un élargissement du jonc (20) et est délimité axialement, du côté tourné vers une ouverture (22) de montage du boîtier (6) par une première surface (26) inclinée, qui forme la surface de maintien du boîtier (6), qui empêche le jonc (20) de se déplacer en direction de l'ouverture (22) de montage et
dans lequel une autre surface (30) inclinée, qui précède dans la direction de montage sur le corps (4) de la soupape, une partie (24) ayant le diamètre extérieur le plus grand, forme une pente d'introduction, qui élargit le jonc (20) lors du montage dans l'espace (32) de montage.

2. Combinaison suivant la revendication 1, **caractérisée en ce que** la profondeur (d2) radiale de l'espace (32) de montage est plus grande que le diamètre (d1) de cordon du jonc (20).

3. Combinaison suivant la revendication 1 ou 2, **caractérisée en ce qu'**il est prévu, à la suite dans le sens de montage de la partie (24) de diamètre extérieur le plus grand, une autre surface (28) inclinée, comme surface de maintien, coopérant avec le jonc (20), du corps (4) de la soupape.

4. Combinaison suivant l'une des revendications précédentes, **caractérisée en ce que** la première surface (26) inclinée, formant la surface de maintien du boîtier (6), et l'autre surface (28) inclinée, formant la surface de maintien du corps (4) de la soupape, convergent l'une vers l'autre dans la direction de l'axe (18) longitudinal, de manière à ce que la distance entre elles diminue dans leur tracé jusqu'à une valeur, qui est plus petite que le diamètre (d1) de cordon du jonc (20).

5. Combinaison suivant l'une des revendications précédentes, **caractérisée en ce que** le jonc (20) a une partie (40) d'extrémité, qui est coudée hors du plan du jonc, **en ce qu'**il est prévu, dans le corps (4) de la soupape, une rainure (46) s'étendant axialement et, dans le boîtier (6), un évidement, s'étendant axialement à partir de l'espace (32) de montage, sous la forme d'un trou (48) ou d'une rainure (50), qui forment un espace de pénétration de la partie (40) d'extrémité du jonc (20).
